# EUROPÄISCHE PATENTSCHRIFT

(11) **EP 1 830 463 B1**
(45) Veröffentlichungstag und Bekanntmachung des Hinweises auf die Patenterteilung: **16.05.2012**
(21) Anmeldenummer: 06004274.4
(22) Anmeldetag: 02.03.2006
(51) Int. Cl.: H02P 7/20, H02P 7/00

(54) **Aktor/Sensor-Schaltungsanordnung und Verfahren zum Auslesen eines Sensors**
Actuator/sensor-circuit arrangement and method for reading out a sensor
Ensemble circuit d'un actionneur/capteur et procédé pour lire un capteur

(43) Veröffentlichungstag der Anmeldung: 05.09.2007
(73) Patentinhaber: Delphi Technologies, Inc., Troy, MI 48007 (US)
(72) Erfinder: Altrogge, Rainer, 50997 Köln (DE); Rosenthal, Thorsten, 45473 Mülheim (DE)
(74) Vertreter: Denton, Michael John

(56) Entgegenhaltungen:
- DE-A1- 4 024 689
- DE-A1- 19 653 052
- DE-A1- 19 700 665
- DE-A1-102004 008 910
- JP-A- 8 013 909
- JP-A- 2001 173 463

## Beschreibung

Die vorliegende Erfindung betrifft eine Aktor/Sensor-Schaltungsanordnung mit wenigstens einem Aktor, der über wenigstens eine elektrische Versorgungsleitung mit einer Stromversorgung verbunden ist, und Sensoren mit wenigstens einer Signalleitung zur Übermittlung des Sensorsignals an eine Auswerteeinheit. Die Erfindung betrifft weiterhin ein Verfahren zum Auslesen von Sensoren und eine Verwendung einer solchen Aktor/ Sensor-Schaltungsanordnung und eines solchen Verfahrens.

Zum Beispiel im automobilen Bereich werden heutzutage zunehmend und in großer Anzahl Stellmotoren bzw. Aktoren eingesetzt, um mechanische Einstellungen vorzunehmen. Insbesondere in der automobilen Komfortklasse sind Zentralverriegelungen, Sitzverstellungen, Spiegelverstellungen, Fensterheber etc. weit verbreitet.

Die Stellmotoren müssen über in der Regel wenigstens zwei Versorgungsleitungen mit einer Stromversorgung verbunden sein, die die notwendige Energie zum Betrieb des jeweiligen Stellmotors zur Verfügung stellt.

In der Regel ist es gewünscht, dass die jeweils vorliegende Einstellung des mit dem Stellmotor verstellten Elementes festgestellt werden kann. Dazu müssen Endschalter oder zum Beispiel Hallsensoren die aktuelle Einstellung auslesen und an eine Auswerteeinheit übermitteln. Dazu sind Signalleitungen zwischen den jeweiligen Sensoren und dazu gehörigen Auswerteeinheiten vorgesehen.

In der Regel sind die Stromversorgungen der Stellmotoren und die Auswerteeinheiten an zentraler Stelle im Kraftfahrzeug, zum Beispiel als Zentraleinheit im Motorraum vorgesehen. Die Stellmotoren und Sensoren sind andererseits nahe dem jeweils einzustellenden Element vorgesehen. Zwischen den Stellmotoren und der Zentraleinheit einerseits und den Sensoren und der Zentraleinheit andererseits sind entsprechende Versorgungsleitungen und Signalleitungen parallel vorgesehen.

Zum Beispiel in Zentralverriegelungssystemen ist im bzw. am jeweiligen Türschloss ein Stellmotor zur Bewegung des Schlosses und ein Endschalter vorgesehen, mit dessen Hilfe ausgelesen wird, ob das Schloss geschlossen oder geöffnet ist.

Zum Beispiel bei Sitzverstellungssystemen sind mehrere Stellmotoren je Sitz vorgesehen, die für die Bewegung des Sitzes in unterschiedlichen Richtungen verantwortlich sind. Zu jeder Bewegung ist ein Sensor, zum Beispiel ein Hallsensor, vorgesehen, der die Bewegung überwacht. Für jeden Sensor sind eigene Signalleitungen notwendig.

Durch die zunehmende Anwendung von Stellmotoren mit den dazu notwendigen Sensoren erhöht sich der Verkabelungsaufwand in Kraftfahrzeugen signifikant.

Eine Aktor/Sensor-Schaltungsanordnung mit einem Aktor, der über wenigstens eine elektrische Versorgungsleitung mit einer Stromversorgung verbunden ist, und einem Sensor mit wenigstens einer Signalleitung zur direkten Auslesung des Sensorsignals durch eine Auswerteeinheit ist aus JP 2001/173463 A bekannt.

Aufgabe der vorliegenden Erfindung ist es, eine Aktor/Sensor-Schaltungsanordnung und ein Verfahren zum Auslesen von Sensoren anzugeben, die einen geringeren Verkabelungsaufwand erfordern. Diese Aufgabe wird mit einer Aktor/Sensor-Schaltungsanordnung mit den Merkmalen des Anspruches 1 und einem Verfahren mit den Merkmalen des Anspruches 6 gelöst. Unteransprüche sind auf bevorzugte Ausführungsformen gerichtet.

Eine besonders vorteilhafte Verwendung der erfindungsgemäßen Aktor/Sensor-Schaltungsanordnung und des erfindungsgemäßen Verfahrens ist Gegenstand des Anspruches 7.

Die erfindungsgemäße Aktor/Sensor-Schaltungsanordnung umfasst wenigstens einen Aktor, der über wenigstens eine elektrische Versorgungsleitung mit einer Stromversorgung verbunden ist. Eine Versorgungsleitung zu einem Anschluss des Aktors kann ausreichen, wenn der zweite Anschluss des Aktors geerdet ist. Vorteilhafterweise sind jedoch wenigstens zwei Versorgungsleitungen für den Aktor vorgesehen, die einen Drehstrombetrieb und/oder einen Betrieb mit unterschiedlichen Richtungen ermöglichen.

Weiterhin sind Sensoren mit wenigstens einer Signalleitung zur direkten Auslesung des Sensorsignals durch eine Auswerteeinheit vorgesehen. Das Sensorsignal wird direkt ausgelesen, wozu insbesondere keine Umwandlung zum Beispiel durch eine Frequenzmodulation oder ähnliches vorzusehen ist.

Wenigstens ein Teil einer Versorgungsleitung des Aktors und wenigstens ein Teil der Signalleitung des Sensors werden durch eine gemeinsame Leitung gebildet.

Mit der erfindungsgemäßen Aktor/Sensor-Schaltungsanordnung wird der Verkabelungsaufwand reduziert. Beispielsweise sind zwischen dem Türschloss eines Kraftfahrzeugs, das als Teil eines Zentralverriegelungssystems automatisch bedient wird, und der Zentraleinheit nur die Versorgungsleitungen für den Stellmotor des Türschlosses notwendig. Für die Signalleitung des Endschalters wird eine der Versorgungsleitungen verwendet.

Das Sensorsignal wird über eine Versorgungsleitung ausgelesen, die gerade nicht bestromt ist, also insbesondere wenn der über diese Versorgungsleitung versorgte Aktor nicht in Betrieb ist. Dazu kann eine entsprechende Steuerung vorgesehen sein, die eine Auslesung des jeweiligen Sensors nur dann zulässt, wenn die zur Auslesung verwendete Versorgungsleitung gerade nicht bestromt ist, das heißt der von dieser Versorgungsleitung versorgte Aktor gerade nicht in Betrieb ist.

Bei einer Ausführungsform, bei der der Aktor eine Bewegung bewirkt, die von dem Sensor detektiert wird, der sich mit diesem Aktor eine Leitung teilt, kann dies zum Beispiel dadurch erreicht werden, dass das Sensorsignal nur dann ausgelesen wird, wenn der Aktor gerade nicht in Betrieb ist.

Ein Bespiel ist das Türschloss einer Zentralverriegelung. In der Regel ist es hier nur von Interesse, auszulesen, ob das Schloss gerade geöffnet oder geschlossen ist. Eine Auslesung des entsprechenden als Endschalter ausgestalteten Sensors ist also nur notwendig, wenn der Stellmotor zur Bewegung des Türschlosses ohnehin gerade nicht in Betrieb ist, so dass die Versorgungsleitungen des Stellmotors nicht bestromt sind. Zur Auslesung des Sensorsignals kann hier also eine Versorgungsleitung verwendet werden, die zur Versorgung des Stellmotors dient, der für die Bewegung des Türschlosses verantwortlich ist.

Bei anderen Ausführungsformen, bei denen mehrere Aktoren vorgesehen sind, kann die Verschaltung derart ausgestaltet sein, dass ein Sensor mit einem Aktor eine Leitung teilt, dessen Aktion das entsprechende Sensorsignal nicht beeinflusst, das heißt, wenn der Sensor nicht zum Detektieren der durch diesen speziellen Aktor ausgelösten Bewegung dient.

Dies wird am Beispiel der Sitzverstellung in einem Kraftfahrzeug erläutert. Mehrere Stellmotoren sind für unterschiedliche Sitzbewegungen vorgesehen. Jeder dieser Stellmotoren hat zum Beispiel eigene Versorgungsleitungen. Die Sensoren, die die Stellung des Sitzes auslesen und an die Zentraleinheit übermitteln, nutzen Versorgungsleitungen der Stellmotoren als Signalleitungen. Dabei nutzt die Signalleitung eines Sensors die Versorgungsleitung eines Stellmotors aus, der für eine Bewegung des Sitzes verantwortlich ist, die nicht durch das entsprechende Sensorsignal charakterisiert ist. So ist auf einfache Weise realisiert, dass das Sensorsignal eine Versorgungsleitung ausnutzt, die gerade nicht zum Betrieb eines Stellmotors bestromt ist.

Die erfindungsgemäße Aktor/Sensor-Schaltungsanordnung ist grundsätzlich überall dort einsetzbar, wo Aktoren betrieben werden und Sensoren ausgelesen werden müssen. Besonders vorteilhaft ist die Anwendung jedoch, wenn der wenigstens eine Aktor und Sensoren einerseits und die Stromversorgung des Aktors und die Auswerteeinheit der Sensoren andererseits an voneinander entfernten Orten angeordnet sind. Der erfindungsgemäße Vorteil der Verkabelungsreduzierung tritt dann besonders in den Vordergrund, da längere zu verlegende Leitungen eingespart werden können.

Besonders einfach ist die Aktor/Sensor-Schaltungsanordnung anwendbar, wenn die Sensorsignale analog, insbesondere Spannungssignale, sind. Zum Beispiel können die Sensoren Widerstände umfassen, die durch Messung des Spannungsabfalles bei Stromfluss durch den Sensor charakterisiert sind. Ebenso können die Sensoren Hallsensoren umfassen, die zum Feststellen einer Stellung eines mit einem Aktor bewegten Elementes dienen.

Besonders problemlos lässt sich die Erfindung einsetzen, wenn die Sensoren Endschalter umfassen, von denen als Sensorsignale nur ausgelesen wird, ob sie geöffnet oder geschlossen sind, wobei also insbesondere ausgelesen wird, ob sie elektrisch durchgängig sind.

Mit der erfindungsgemäßen Aktor/ Sensor-Schaltungsanordnung ist es auch möglich, mehrere Sensoren über ein und dieselbe Versorgungsleitung eines Aktors auszulesen, wobei die Sensoren spannungskodiert sind. Dazu sind die Sensoren als Endschalter ausgestaltet, die im geschlossenen Zustand ein unterschiedlich hohes Signal erzeugen, insbesondere indem sie im geschlossenen Zustand unterschiedlich hohe Widerstände haben. Aus der Höhe des gemessenen Widerstandes kann dann darauf geschlossen werden, welcher der Endschalter geschlossen ist.

Ein erfindungsgemäßes Verfahren zum Auslesen von Sensoren beruht darauf, dass zur Auslesung des jeweiligen Sensorsignals zumindest ein Teil einer Versorgungsleitung eines Aktors verwendet wird, der während des Ausleseprozesses gerade nicht in Betrieb ist. Insbesondere ist das erfindungsgemäße Verfahren zum Auslesen von Sensoren einer erfindungsgemäßen Aktor/Sensor-Schaltungsanordnung geeignet. Die Vorteile des Verfahrens ergeben sich aus der obigen Erläuterung der Vorteile einer entsprechenden Aktor/ Sensor-Schaltungsanordnung.

Besonders wirtschaftlich ist die Verwendung einer erfindungsgemäßen Aktor/Sensor-Schaltungsanordnung oder eines erfindungsgemäßen Verfahrens bei der Anwendung in einem Kraftfahrzeug. Dort ist heutzutage in der Regel eine große Anzahl von Stellmotoren und Sensoren im Einsatz, so dass die Verringerung des Verkabelungsaufwandes auch im Hinblick auf die Kosten und die beengten Platzverhältnisse besonders vorteilhaft ist.

Die Erfindung wird anhand der beiliegenden Figur im Detail erläutert.

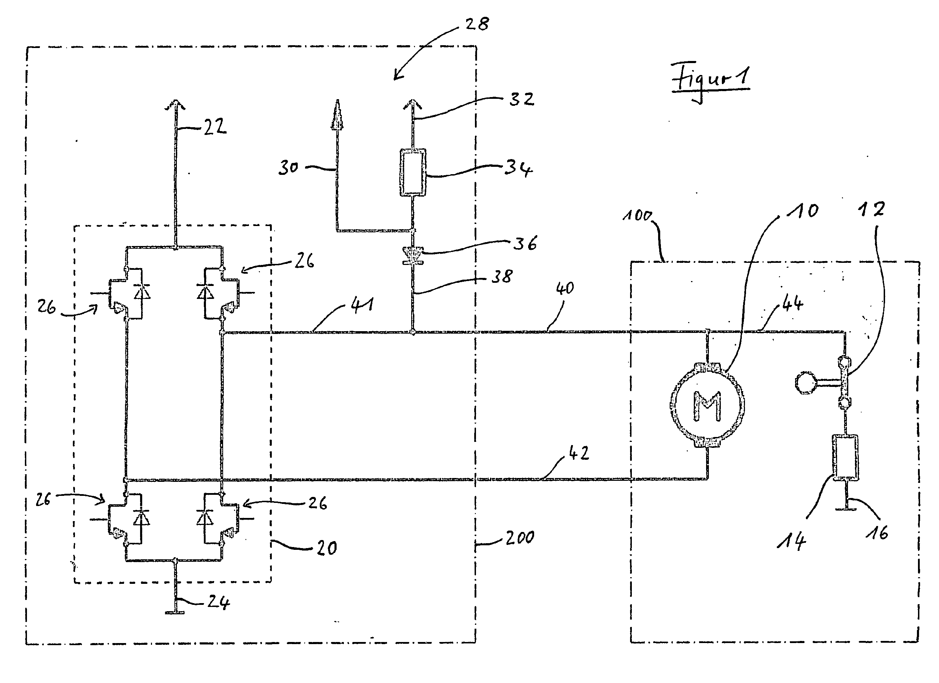

- Fig. 1: zeigt das Schaltbild einer Aktor/Sensorschaltung mit nur einem als Endschalter ausgestalteten Sensor.

Beschrieben wird eine Ausführung zur Verwendung mit einem Türschloss eines Kraftfahrzeugs. Das Türschloss 100 umfasst einen Stellmotor 10 zur Bewegung des Schlosses. Ein Endschalter 12 ist zum Beispiel so verschaltet, dass er bei geöffnetem Türschloss elektrisch durchgängig ist.

Der Stellmotor 10 wird über eine erste Versorgungsleitung 40, 41 und eine zweite Versorgungsleitung 42 mit Energie versorgt. Sie verbinden den Stellmotor 10 in dem Türschloss 100 mit einer Brückenschaltung 20, die in einer Zentraleinheit 200, zum Beispiel einem Bordcomputer des Kraftfahrzeugs, vorgesehen ist. Die Zentraleinheit 200 ist zum Beispiel im Motorraum angeordnet. Die Brückenschaltung 20 dient in an sich bekannter Weise zur Versorgung des Stellmotors 10. Dazu ist sie über den Anschluss 24 geerdet und über den Anschluss 22 für die Batteriespannungseinspeisung mit der Batterie des Kraftfahrzeugs verbunden. Die Schaltelemente 26 der Brückenschaltung 20 dienen in an sich bekannter Weise dazu, die Spannung je nach gewünschter Stromrichtung mit dem Stellmotor 10 zu verbinden, so dass mit der Brückenschaltung 20 der Motor in beiden Richtungen betrieben werden kann um zum Beispiel das Schloss zu öffnen oder zu schließen, oder einen Drehstrombetrieb zu ermöglichen.

Der Endschalter 12 ist über einen Widerstand 14 mit einem Anschluss 16 verbunden, der zur Masse führt. Andererseits ist der Endschalter 12 über eine Signalleitung 38, 40, 44 mit einer Auswerteschaltung 28 in der Zentraleinheit 200 des Kraftfahrzeugs verbunden, die zur Auslesung des Sensorsignals dient, also beim beschriebenen Beispiel zur Feststellung, ob der Endschalter 12 geöffnet oder geschlossen ist. Die Auswerteschaltung 28 umfasst einen Anschluss 32 zur Einspeisung einer Messspannung. Diese wird über einen Widerstand 34 und eine Schutzdiode 36 in den Signalleitungsteil 38 eingespeist. Am Anschluss 30 für ein Spannungsmessgerät wird der Spannungsabfall an einem Widerstand 34 abgegriffen. Bei geschlossenem Endschalter 12 fließt ein durch die Messspannung am Anschluss 32 bewirkter Strom, der zu einem Spannungsabfall am Widerstand 34 führt, der über den Spannungsabgriff 30 bestimmt werden kann. Bei geöffnetem Endschalter 12 liegt an dem Anschluss 30 die volle Messspannung an. So kann die Stellung des Endschalters 12 mit der Auswerteschaltung 28 festgestellt werden.

Derjenige Teil der Leitung mit der Bezugsziffer 40 ist sowohl Teil der Versorgungsleitung 40, 41 des Stellmotors 10 als auch Teil der Signalleitung 38, 40, 44 des Endschalters 12. Durch eine nicht gezeigte Steuerung wird sichergestellt, dass eine Auswertung des Sensorsignals nur dann erfolgt, wenn der Stellmotor 10 durch die Brückenschaltung 20 gerade nicht bestromt ist. Das heißt, bei dem beschriebenen Beispiel wird eine Auslesung der Stellung des Endschalters 12 nur dann vorgenommen, wenn der Stellmotor 10 gerade nicht in Betrieb ist. Im Falle eines Türschlosses eines Kraftfahrzeugs wird dazu der Endschalter 12 nur dann ausgelesen, wenn das Schloss entweder im geöffneten oder im geschlossenen Zustand ist, und nicht während des Öffnungs- bzw. Schließprozesses selbst.

Wenn der Stellmotor 10 gerade in Betrieb ist, das heißt die Versorgungsleitung 40, 41 gerade bestromt ist, schützt die Schutzdiode 36 die Auswerteschaltung 28 vor Überspannung.

Bei der geschilderten Anordnung sind zwischen dem Türschloss 100 und der Zentraleinheit 200 dementsprechend nur zwei Leitungen 40, 42 notwendig, so dass gegenüber bekannten Lösungen zumindest eine Leitung eingespart ist. Gerade bei beengten Platzverhältnissen, wie sie für die Verlegung von Kabeln in Kraftfahrzeugen vorliegen, ist dies vorteilhaft und aufgrund der Einsparung kostengünstig.

Bei der geschilderten Ausgestaltung ist der Endschalter zur Detektion der Bewegung vorgesehen, die mit dem Stellmotor bewirkt wird, dessen eine Versorgungsleitung mit der Signalleitung dieses Sensors eine gemeinsame Leitung bildet.

Bei anderen Ausgestaltungen, bei denen mehrere Aktoren und eine entsprechende Anzahl von Sensoren vorgesehen sind, muss die Signalleitung eines bestimmten Sensors nicht notwendigerweise mit einer Versorgungsleitung desjenigen Aktors eine gemeinsame Leitung bilden, der für die Bewegung zuständig ist, die von diesem bestimmten Sensor detektiert wird. So können zum Beispiel bei der Sitzverstellung in einem Kraftfahrzeug ein Sensor, der zur Detektion der Lehnenneigung dient, eine Signalleitung aufweisen, die eine gemeinsame Leitung mit einer Versorgungsleitung eines Stellmotors bildet, der für die Einstellung der Sitzhöhe zuständig ist. Wird mit Hilfe dieses Stellmotors gerade die Sitzhöhe eingestellt, ist die Auslesung der Sitzlehnenneigung nicht notwendig. So ist auf einfache Weise sicher gestellt, dass eine gemeinsame Leitung nicht gleichzeitig zum Auslesen eines Sensorsignals und zur Bestromung eines Stellmotors verwendet werden muss.

Bei einer nicht dargestellten erfindungsgemäßen Ausführungsform teilen sich die Signalleitungen zweier oder mehrerer unterschiedlicher Sensoren mit der Versorgungsleitung eines Aktors eine gemeinsame Leitung. Insbesondere kann dies durch Parallelschaltung von Kombinationen aus Endschaltern und Widerständen erreicht werden, die der beschriebenen Serienschaltung des Endschalters 12 und des Widerstandes 14 entsprechen. Die zum Beispiel als Endschalter ausgestalteten Sensoren werden dabei derart verschaltet, dass sie unterschiedliche Signale erzeugen, wenn sie geschlossen sind. Zum Beispiel kann der jeweilige Widerstand 14 zwischen dem Endschalter und dem Masseanschluss 16 für die unterschiedlichen Endschalter unterschiedlich groß gewählt sein. Je nachdem welcher Schalter bei der Sensorauslesung gerade geschlossen ist, fließt ein unterschiedlicher durch die anliegende Messspannung am Anschluss 32 bewirkter Strom, so dass ein unterschiedlich hohes Spannungssignal am Spannungsabgriff 30 gemessen wird.

### Bezugszeichenliste

- 10: Stellmotor
- 12: Endschalter
- 14: Widerstand
- 16: Masseanschluss
- 20: Brückenschaltung
- 22: Batteriespannungseinspeisung
- 24: Masseanschluss
- 26: Schaltelement
- 28: Auswerteeinheit
- 30: Spannungsmessgeräteanschluss
- 32: Messspannungseinspeisung
- 34: Widerstand
- 36: Schutzdiode
- 38: Signalleitung, 1. Teil
- 40: gemeinsame Leitung
- 41: Versorgungsleitungsteil
- 42: Versorgungsleitung
- 44: Signalleitung, 2. Teil
- 100: Türschloss
- 200: Zentraleinheit

## Patentansprüche

1. Aktor/Sensor-Schaltungsanordnung, die folgendes umfasst:
wenigstens einen Aktor (10), der über wenigstens eine elektrische Versorgungsleitung (40, 41; 42) mit einer Stromversorgung (20) verbunden ist,
mehrere parallel zu dem wenigstens einem Aktor (10) geschaltete und als Endschalter (12) für eine durch einen Aktor (10) bewirkte Bewegung ausgebildete Sensoren mit wenigstens einer Signalleitung (38, 40, 44) zur direkten Auslesung der Sensorsignale durch eine Auswerteeinheit (28), und
eine Schutzdiode (36) zum Schutz der Auswerteschaltung (28) gegen Überspannung,
wobei die Signalleitungen der Sensoren mit einer Versorgungsleitung wenigstens eines Aktors (10) eine zumindest teilweise gemeinsame Leitung bilden, wobei die Endschalter derart ausgestaltet sind, dass sie im geschlossenen Zustand ein unterschiedlich hohes Signal erzeugen, vorzugsweise indem sie im geschlossenen Zustand unterschiedlich hohe Widerstände gegen Masse haben, und
wobei die Aktor/Sensor-Schaltungsanordnung derart ausgestaltet ist, dass die Sensoren (12) jeweils nur dann ausgelesen werden, wenn derjenige Aktor (10), dessen eine Versorgungsleitung (40, 41) zumindest teilweise mit zumindest einem Teil der Signalleitung (38, 40, 44) des jeweiligen Sensors (12) eine gemeinsame Leitung (40) bildet, gerade nicht in Betrieb ist.

2. Aktor/Sensor-Schaltungsanordnung nach Anspruch 1, bei der die Sensoren wenigstens einen Endschalter (12) für eine durch denjenigen Aktor (10) bewirkte Bewegung umfassen, dessen eine Versorgungsleitung (40, 41) mit der Signalleitung (38, 40, 44) dieses Sensors (12) eine gemeinsame Leitung (40) bildet, und bei der eine Steuerung vorgesehen ist, die derart ausgestaltet ist, dass ein Auslesen des Sensorsignals des Sensors (12) nur dann bewirkt wird, wenn dieser Aktor (10) nicht in Betrieb ist.

3. Aktor/ Sensor-Schaltungsanordnung nach Anspruch 1, bei der (i) mehrere Aktoren vorgesehen sind, (ii) die Aktoren und die Sensoren derart verschaltet sind, dass ein über eine Versorgungsleitung (40, 41) eines ersten Aktors (10) übermitteltes Sensorsignal nicht durch die Bewegung des ersten Aktors (10) beeinflusst wird, und (iii) eine Steuerung vorgesehen ist, die derart ausgestaltet ist, dass ein Auslesen des Sensorsignals nur dann bewirkt wird, wenn der erste Aktor (10) nicht in Betrieb ist.

4. Aktor/Sensor-Schaltungsanordnung nach einem der Ansprüche 1 bis 3, bei der der wenigstens eine Aktor (10) und Sensoren (12) einerseits und die Stromversorgung (20) des Aktors (10) und die Auswerteeinheit (28) der Sensoren (12) andererseits an voneinander entfernten Orten angeordnet sind.

5. Aktor/ Sensor-Schaltungsanordnung nach einem der Ansprüche 1 bis 4, bei der die Sensorsignale analog sind.

6. Verfahren zum Auslesen von Sensoren, insbesondere in einer Aktor/Sensor-Schaltungsanordnung gemäß einem der Ansprüche 1 bis 5, bei dem mehrere parallel zu dem wenigstens einen Aktor (10) geschaltete Sensoren (12) mit wenigstens einer Signalleitung (38, 40, 44) ausgelesen werden, die Endschalter für eine durch einen Aktor (10) bewirkte Bewegung umfassen, wobei der Aktor über wenigstens eine elektrische Versorgungsleitung (40, 41; 42) mit einer Stromversorgung (20) verbunden ist, wobei wenigstens ein Teil einer Versorgungsleitung (40, 41) des Aktors (10) und wenigstens ein Teil der Signalleitung (38, 40, 44) der jeweiligen Sensoren (12) durch eine gemeinsame Leitung gebildet werden, der während des Ausleseprozesses nicht in Betrieb ist, und
die Endschalter im geschlossenen Zustand ein unterschiedlich hohes Signal erzeugen, vorzugsweise indem sie im geschlossenen Zustand unterschiedlich hohe Widerstände gegen Masse haben, und die Auswerteschaltung durch eine Schutzdiode (36) vor Überspannung geschützt wird.

7. Verwendung einer Aktor/Sensor-Schaltungsanordnung gemäß einem der Ansprüche 1 bis 5 oder eines Verfahrens nach Anspruch 6 zum Betrieb wenigstens eines Aktors (10) und zum Auslesen von als Endschalter (12) ausgestalteten Sensoren in einem Kraftfahrzeug.

## Claims

1. Actuator/sensor circuit arrangement comprising:
at least an actuator (10) connected with a power supply (20) via at least one electrical supply line (40, 41, 42),
a plurality of sensors, connected in parallel to the at least one actuator (10) and configured as limit switch (12) for movement effected by an actuator (10), having at least one signal line (38, 40, 44) for direct readout of sensor signals by an evaluation unit (28), and
a protective diode (36) for protection of the evaluation circuit (28) against overvoltage,
wherein the signal lines of the sensors and a supply line of at least one actuator (10) form an at least partially common line, wherein the limit switches are configured so as to generate a signal with different levels in the closed state, particularly by having different levels of resistance to ground when in the closed state, and
wherein the actuator/sensor circuit arrangement is configured such that the sensors (12) are each read out only if the actuator (10), whose supply line (40, 41) at least partially forms a common line (40) with at least a part of the signal line (38, 40, 44) of the respective sensor (12), is not in operation.

2. Actuator/sensor circuit arrangement according to claim 1, wherein the sensors include at least one limit switch (12) for movement effected by the actuator (10) whose one supply line (40, 41) forms a common line (40) with the signal line (38, 40, 44) of the sensor (12), and having a control configured such that readout of the sensor signal of the sensor (12) is effected only if said actuator (10) is not in operation.

3. Actuator/sensor circuit arrangement according to claim 1, wherein (i) a plurality of actuators is provided, (ii) the actuators and sensors are connected such that a sensor signal communicated through a supply line (40, 41) of a first actuator is not affected by movement of the first actuator (10), and (iii) a control is provided configured such that readout of the sensor signal is effected only if the first actuator (10) is not in operation.

4. Actuator/sensor circuit arrangement according to one of claims 1 to 3, wherein the at least one actuator (10) and sensors (12) on the one hand and the power supply (20) of the actuator (10) and the evaluation unit (28) of the sensors (12) on the other hand are located at locations distant from each other.

5. Actuator/sensor circuit arrangement according to one of claims 1 to 4, wherein the sensor signals are analog.

6. Method for reading out sensors, in particular in an actuator/sensor circuit arrangement according to one of claims 1 to 5, wherein a plurality of sensors, connected in parallel to the at least one actuator (10) having at least one signal line (38, 40, 44) are read out, having limit switches for movement effected by an actuator (10), wherein the actuator is connected with a power supply (20) via at least one electrical supply line (40, 41, 42), wherein at least part of a supply line (40, 41) of the actuator (10) and at least part of the signal line (38, 40, 44) of the respective sensors (12) are formed by a common line, which is not in operation during readout, and
wherein the limit switches generate a signal with different levels in the closed state, particularly by having different levels of resistance to ground when in the closed state, and
the evaluation circuit is protected against overvoltage by a protective diode (36).

7. Usage of an actuator/sensor circuit arrangement according to one of claims 1 to 5 or a method according to claim 6 for operation of at least one actuator (10) and for readout of sensors formed as limit switches (12) in a motor vehicle.

## Revendications

1. Agencement de circuit acteur/capteur, comprenant les éléments suivants :
au moins un acteur (10) qui est connecté à une alimentation électrique (20) via au moins une ligne d'alimentation électrique (40, 41 ; 42),
plusieurs capteurs, branchés en parallèle audit au moins un acteur (10) et réalisés sous forme de commutateurs de fin de course (12) pour un mouvement provoqué par un acteur (10), avec au moins une ligne de signalisation (38, 40, 44) pour une lecture directe des signaux des capteurs par une unité d'évaluation (28), et
une diode protectrice (36) pour protéger le circuit d'évaluation (28) à l'encontre d'une surtension,
dans lequel les lignes de signalisation des capteurs forment, avec une ligne d'alimentation d'au moins un acteur (10), une ligne au moins partiellement commune, et les commutateurs de fin de course sont conçus de telle façon que, à l'état fermé, ils produisent un signal de hauteur différente, de préférence du fait que, dans l'état fermé, ils présentent des résistances de valeurs différentes vis-à-vis de la masse, et
dans lequel l'agencement de circuit acteur/capteur est conçu de telle façon que les capteurs (12) ne sont lus que lorsque que l'acteur (10), dont la ligne d'alimentation (40, 41) forme au moins partiellement une ligne commune avec au moins une partie de la ligne de signalisation (38, 40, 44) du capteur respectif (12), n'est à ce moment pas en service.

2. Agencement de circuit acteur/capteur selon la revendication 1, dans lequel les capteurs comprennent au moins un commutateur de fin de course (12) pour un mouvement provoqué par l'acteur (10) dont la ligne d'alimentation (40, 41) forme une ligne commune (40) avec la ligne de signalisation (38, 40, 44) de ce capteur (12), et dans lequel est prévue une commande qui est conçue de telle façon qu'une lecture du signal du capteur (12) n'a lieu que lorsque cet acteur (10) n'est pas en service.

3. Agencement de circuit acteur/capteur selon la revendication 1, dans lequel (i) il est prévu plusieurs acteurs (ii) les acteurs et les capteurs sont branchés de telle façon qu'un signal de capteur, transmis par une ligne d'alimentation (40, 41) d'un premier acteur (10), n'est pas influencé par le mouvement du premier acteur (10), et (iii) il est prévu une commande qui est conçue de telle façon qu'une lecture du signal du capteur n'a lieu que lorsque le premier acteur (10) n'est pas en service.

4. Agencement de circuit acteur/capteur selon l'une des revendications 1 à 3, dans lequel au moins un acteur (10) et des capteurs (12) d'une part, et l'alimentation électrique (20) de l'acteur (10) et l'unité d'évaluation (28) des capteurs (12) d'autre part sont agencés à des emplacements éloignés l'un de l'autre.

5. Agencement de circuit acteur/capteur selon l'une des revendications 1 à 4, dans lequel les signaux des capteurs sont analogiques.

6. Procédé pour la lecture de capteur, en particulier dans un agencement de circuit acteur/capteur selon l'une des revendications 1 à 5, dans lequel plusieurs capteurs (12), branchés en parallèle audit au moins un acteur (10), sont lus avec au moins une ligne de signalisation (38, 40, 44) qui comprennent des commutateurs de fin de course pour un mouvement provoqué par un acteur (10), dans lequel l'acteur est connecté à une alimentation électrique (20) via au moins une ligne d'alimentation électrique (40, 41 ; 42), dans lequel au moins une partie d'une ligne d'alimentation (40, 41) de l'acteur (10) et au moins une partie de la ligne de signalisation (38, 40, 44) des capteurs respectifs (12) sont formés par une ligne commune qui n'est pas en service pendant le processus de lecture, et
à l'état fermé, les commutateurs de fin de course produisent un signal de hauteur différente, de préférence du fait que, à l'état fermé, ils présentent des résistances de valeurs différentes vis-à-vis de la masse, et le circuit d'évaluation est protégé vis-à-vis des surtensions par une diode protectrice (36).

7. Utilisation d'un agencement de circuit acteur/capteur selon l'une des revendications 1 à 5, ou d'un procédé selon la revendication 6 pour le fonctionnement d'au moins un acteur (10) et pour la lecture des capteurs, conçu sous forme de commutateurs de fin de course (12), dans un véhicule automobile.
